(19) Europäisches Patentamt
European Patent Office
Office européen des brevets

(11) **EP 4 206 654 A1**

(12) **EUROPEAN PATENT APPLICATION**

(43) Date of publication:
**05.07.2023 Bulletin 2023/27**

(51) International Patent Classification (IPC):
***G01N 21/65*** (2006.01) ***G01N 21/27*** (2006.01)

(21) Application number: **21217930.3**

(22) Date of filing: **28.12.2021**

(52) Cooperative Patent Classification (CPC):
**G01N 21/65; G01N 21/274;** G01N 21/658;
G01N 2201/0221; G01N 2201/121; G01N 2201/127

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Serstech AB
227 64 Lund (SE)**

(72) Inventor: **Szybek, Katja
223 50 Lund (SE)**

(74) Representative: **AWA Sweden AB
Box 5117
200 71 Malmö (SE)**

(54) **METHOD AND SYSTEM FOR RAMAN SPECTROSCOPY**

(57) The present inventive concept relates to a method and a system for Raman spectroscopy. The system (100) for Raman spectroscopy comprising: a dichroic mirror (113) configured to reflect a first portion (104a) of light having wavelengths within a first wavelength interval and to transmit a second portion (104b) of light having wavelengths within the first wavelength interval, and to transmit light having wavelengths within a second wavelength interval; and a light source (110) configured to illuminate the dichroic mirror (113) with light having wavelengths within the first wavelength interval; wherein the dichroic mirror (113) is configured to reflect light of the first portion (104a) to illuminate a sample (102) and to transmit light of the second portion (104b) to illuminate a reference sample (202), and wherein the dichroic mirror (113) is further configured to transmit light scattered (106) by the sample (102) having wavelengths within the second wavelength interval; the system (100) further comprising: a spectrometer (120) comprising an entrance slit (121) configured to receive light (106) scattered by the sample (102) and light (206) scattered by the reference sample (202); and circuitry (160) configured to execute: a determination function (172) configured to determine, using the spectrometer (120), a signal comprising a first information pertaining to a Raman spectrum of the sample (102) and a second information pertaining to a Raman spectrum of the reference sample (202), thereby allowing the first information to be compensated by means of the second information.

*FIG. 4*

**EP 4 206 654 A1**

**Description**

Technical field

The present inventive concept relates to a system for Raman spectroscopy. The present inventive concept further relates to a method for compensating a Raman spectrum of a sample by a Raman spectrum of a reference sample.

Background of the invention

To detect and to determine different substances is highly desired in a large variety of applications ranging from chemical analysis to in-field determination of potentially hazardous and toxic substances. In many situations correct determination of a substance is of utmost importance. For instance, to be able to determine if a substance is hazardous, for example explosive, or not is critical since it may otherwise result in severe consequences with personnel injuries and material losses. Similarly, it may also be critical to determine if a substance is toxic or not since a wrongful determination may result in serious consequences involving personnel and environmental risks. Further, it is important to verify that a drug is correctly synthesized since an incorrectly synthesized drug may become harmful instead of curative for a subject.

A common approach to investigate properties of a substance is to let the substance undergo a chemical analysis. A chemical analysis of a substance is often accurate but are typically complex. Moreover, chemical analysis often require that various further substances or analytes are used in the analysis. Such analysis therefore tends to become costly and time consuming. Another drawback resides in that such analysis generally are too complicated and time consuming to be conducted under field conditions.

Another commonly used approach for detecting and identifying different substances is to use some form of spectroscopic analysis. A common type of spectroscopic analysis used is optical spectroscopy where light having interacted with the substance in question is analyzed using a spectrometer. The light interacting with the substance is scattered by the substance resulting in that the scattered light is affected by the substance. Such scattering from a substance can either be elastic or inelastic. Elastically scattered photons exhibit the same energy as photons impinging on the substance at hand. Inelastically scattered photons, on the other hand, exhibit a different energy as compared to photons impinging on the substance at hand. Inelastically scattered photons therefore either gain or lose energy.

Both elastically and inelastically scattered photons may be used in spectroscopic analyses of substances. When looking at elastically scattered photons certain properties, such as color, of the substance may be determined. However, when it comes to determining a certain substance more sophisticated spectroscopic techniques also relying on inelastically scattered photons are generally required. Raman spectroscopy is a spectroscopic technique relying on inelastic scattering of photons, known as Raman scattering. In Raman spectroscopy a source of monochromatic light, usually a laser, is used. The light source may emit light in the visible, near infrared, or near ultraviolet range, although X-rays can also be used. The laser light interacts with molecular vibrations, phonons, or other excitations in the molecular system, resulting in that the energy of the laser photons being shifted up or down in the inelastically scattered light thereof. The shift in energy gives information about the vibrational modes in the molecular system at hand. In other words, inelastically scattered light from the molecules of the substance at hand gives rise to a vibrational spectrum that includes of a series of lines or peaks constituting a molecular "fingerprint" for the substance. Hence a substance or material will give rise to a unique Raman spectrum, i.e., its "fingerprint". The unique Raman spectrum makes Raman spectroscopy suitable for identifying or determining substances or materials. In many fields of technology Raman spectroscopy is a well-established spectroscopic technique for rapid identification of substances and chemicals with high degree of accuracy.

A typical Raman spectrum of a substance illustrates the shift of Raman wavelengths relative to elastically scattered light, typically referred to as Rayleigh-scattered light. The Rayleigh-scattered light has the same wavelength as the incident light (i.e., the light emitted by the light source) whereas the Raman wavelengths are shifted up or down relative to the Rayleigh-scattered light. The vertical axis of a Raman spectrum typically represents the intensity of the Raman wavelengths and yields the concentration of the chemical components of the sample or substance, whereas the horizontal axis of a Raman spectrum typically represents the wavelength shift in relation to the Rayleigh-scattered light.

The light from Raman scattering is typically associated with weak intensities and may be difficult to observe without intense monochromatic excitation and a sensitive detector. Typically, 1 out of $10^6$ - $10^9$ photons scattered by a sample is a photon relating to a Raman scattering. Modern technical development of lasers, detectors, and optical components as well as continued miniaturization of electronic components have made it possible to produce fast and reliable portable Raman instruments which are suitable to use under field conditions.

However, variations in the components can affect the stability and performance of Raman instruments, in particular for use under field conditions. For instance, instabilities of the laser used to illuminate samples can greatly reduce the performance of Raman instruments.

Summary of the invention

It is an object to, at least partly, mitigate, alleviate, or eliminate one or more of the above-identified deficiencies in the art and disadvantages singly or in any combination and solve at least the above-mentioned problem.

It is a further object to provide a system and a method for Raman spectroscopy which improves a determination and/or an identification of a sample.

It is a further object to provide a system and a method for Raman spectroscopy which improves a determination and/or identification of a sample under field conditions.

It is also an object to provide a cost-effective system and method for Raman spectroscopy.

According to a first aspect a system for Raman spectroscopy is provided. The system comprising: a dichroic mirror configured to reflect a first portion of light having wavelengths within a first wavelength interval and to transmit a second portion of light having wavelengths within the first wavelength interval, and to transmit light having wavelengths within a second wavelength interval; and a light source configured to illuminate the dichroic mirror with light having wavelengths within the first wavelength interval; wherein the dichroic mirror is configured to reflect light of the first portion to illuminate a sample and to transmit light of the second portion to illuminate a reference sample, and wherein the dichroic mirror is further configured to transmit light scattered by the sample having wavelengths within the second wavelength interval; the system further comprising: a spectrometer comprising an entrance slit configured to receive light scattered by the sample and light scattered by the reference sample; and circuitry configured to execute: a determination function configured to determine, using the spectrometer, a signal comprising a first information pertaining to a Raman spectrum of the sample and a second information pertaining to a Raman spectrum of the reference sample, thereby allowing the first information to be compensated by means of the second information.

The sample and the reference sample may scatter the light via Raman scattering. Hence, the light scattered from the sample and the light scattered by the reference sample may comprise light associated with Stokes Raman scattering, anti-Stokes Raman scattering, and Rayleigh scattering. A spectral response (i.e., Raman shifts) of the reference sample is known beforehand and may thereby be used as a reference. The reference sample may be chemically stable. Put differently, it is possible to determine wavelengths of light incident on the reference sample by analyzing the Raman spectrum of the reference sample (i.e., the second information). Hence, any variation in wavelengths of light emitted by the light source can be determined from the second information.

Within the context of this disclosure, the wording "dichroic mirror" should be construed as a filter which is configured to selectively transmit light of a range of colors (wavelengths) while being configured to reflect other colors (wavelengths). The dichroic mirror may, e.g., be an interference filter. The dichroic mirror may be configured to reflect the first portion of light having wavelengths within the first wavelength range for light having incident angles within a range from 40° to 50°. The dichroic mirror may be configured to transmit the second portion of light having wavelengths within the first wavelength range for light having incident angles within a range from 40° to 50°. The dichroic mirror may be configured to transmit light having wavelengths within the second wavelength range for light having incident angles within a range from 40° to 50°. It is to be understood that a relative intensity between light of the first portion and light of the second portion may depend on the actual angle of incidence with which light emitted on the light source strikes the dichroic mirror. It is further to be understood that the intensity of light having wavelengths within the second wavelength interval and transmitted through the dichroic mirror may depend on the actual angle of incidence with which light emitted on the light source strikes the dichroic mirror. The dichroic mirror may be a dichroic beamsplitter.

By means of the present inventive concept, information associated with a Raman spectrum of the sample and information associated with wavelengths of excitation light (i.e., light emitted by the light source) are captured using a single spectrometer. The intensity of light emitted by the light source is typically substantially higher than light associated with Raman scattering and in case that light would be incident directly onto a light sensor of the spectrometer, the light sensor would not be able to simultaneously detect light scattered by the sample and the excitation light. This is due to the intensity of the excitation light being substantially higher than the intensity of light scattered by the sample. An exposure time of the light sensor may be adjusted such that the excitation light is properly detected, however, since the intensity of light scattered by the sample is substantially lower, light scattered by the sample would not be detected by the light sensor using that exposure time. The exposure time of the light sensor may be adjusted such that light scattered by the sample is properly detected, however, since the intensity of the excitation light is substantially higher, that light would overexpose the light sensor and would therefore not be properly detected. Hence, by directing the second portion of light (i.e., a portion of light emitted by the light source and transmitted through the dichroic mirror) to the reference sample, whereby light is scattered by the reference sample, that light scattered by the reference sample have intensities being more similar to intensities of lights scattered by the sample. This, in turn, allows the light scattered by the sample and light scattered by the reference sample to be properly detected on the same light sensor. Further, since information associated with wavelengths of light emitted by the light source is captured, this information may be used to determine variations in wavelength and/or intensity of the excitation light. This information may then be used to, e.g., compensate the recorded Raman spectrum of the sample for drifts or variations in wavelength and/or intensity of the excitation light.

The drifts or variations in wavelength of light emitted by the light source may, e.g., be an effect of mode hopping of the light source. Mode hopping is a behavior that may occur for a light source, for example Fabry-Perot laser diodes, which may abruptly change wavelengths of light emitted by the light source. Hence, the present system for Raman spectroscopy may allow for compensating the Raman spectrum of the sample due to the effects of mode hopping in the light source. The present system may further allow using Fabry-Perot laser diodes for Raman spectroscopy.

The system may be a handheld system for Raman spectroscopy.

An associated advantage is that the system may be used in field conditions, whereby a quicker identification and/or determination of the substance may be allowed. It may further at least reduce a need to collect the sample to be tested and transport it to a laboratory. Since the sample may be hazardous to human beings, this may further reduce associated risks to personnel tasked with analyzing sample.

The circuitry may be further configured to execute: a compensation function configured to compensate the first information based on the second information.

An associated advantage is that the recorded Raman spectrum of the sample may be compensated for variations or drifts in wavelength and/or intensity of light emitted by the light source. An improved identification and/or determination of the sample may thereby be allowed.

The compensation function may be configured to compensate the first information based on the second information by being configured to: determine a wavelength shift of light emitted by the light source based on the second information; and compensate the first information based on the determined wavelength shift of the light emitted by the light source.

An associated advantage is that the Raman spectrum may be compensated for variations and/or drifts in wavelengths and/or intensities of light emitted by the light source. An improved identification and/or determination of the sample may thereby be allowed.

The system may further comprise: an optical shortpass filter arranged between the reference sample and the spectrometer such that the light scattered by the reference sample may be received at the entrance slit via the optical shortpass filter; and wherein the optical shortpass filter may be configured to transmit light having wavelengths within a third wavelength interval.

Within the context of this disclosure, the wording "optical shortpass filter" should be construed as an optical element configured to transmit electromagnetic radiation having wavelengths shorter than a cut-off wavelength while being configured to block electromagnetic radiation having wavelengths longer than the cut-off wavelength. The optical element may be configured to block electromagnetic radiation having other wavelengths by reflecting and/or absorbing that radiation. Such optical element may, within the art, be referred to as a shortpass edge filter.

The wording "blocking light" should, within the context of this disclosure, be construed as at least reducing an intensity of incident light.

An associated advantage is that light scattered by the reference sample and reaching the entrance slit of the spectrometer may be within a specific wavelength interval (i.e., the third wavelength interval). This may, in turn, allow for restricting light scattered by the reference sample to a portion of the light sensor. This may allow for an improved detection and/or identification of the sample, since it may allow for a different portion of the light sensor to mainly comprise light scattered by the sample.

The third wavelength interval may comprise wavelengths shorter than a nominal wavelength of light emitted by the light source, and wherein the optical shortpass filter may be configured to block a majority of wavelengths within the first wavelength interval.

An associated advantage is that light scattered by the reference sample and reaching the entrance slit of the spectrometer may pertain to anti-Stokes Raman scattering of the reference sample. Since light pertaining to anti-Stokes Raman scattering have wavelengths shorter than the excitation light (i.e., light emitted by the light source), no light scattered by the reference sample via Rayleigh scattering and/or Stokes Raman scattering may reach the light sensor. Hence, a portion of the light sensor associated with wavelengths longer than the excitation light may mainly comprise light scattered by the sample. This may, in turn, allow for an improved detection and/or identification of the sample, since the light on the portion of the light sensor associated with wavelengths longer than the excitation light may mainly be associated with light scattered by the sample.

The system may further comprise: an optical fiber configured to convey the light scattered by the reference sample to the entrance slit.

An associated advantage is that a more compact and/or robust system for Raman spectroscopy may be allowed.

The optical fiber may comprise the reference sample.

An associated advantage is that an improved exposure of the reference sample to the excitation light (i.e., light emitted by the light source) may be allowed. For example, light propagating through the optical fiber may interact with the reference sample during propagation, whereby a time period during which the reference sample is exposed to light may be increased.

A further associated advantage is that an improved collection of light scattered by the reference sample may be allowed.

The optical fiber may be a surface-enhanced Raman spectroscopy, SERS, fiber.

An associated advantage is that an intensity of light scattered by the reference sample may be increased.

The system may further comprise: an optical bandpass filter arranged between the light source and the dichroic mirror such that the light source may illuminate the dichroic mirror via the optical bandpass filter; and wherein the optical bandpass filter may be configured to transmit light having wavelengths within the first wavelength interval.

Within the context of this disclosure, the wording "optical bandpass filter" should be construed as an optical element configured to selectively transmit electromagnetic radiation having wavelengths within a range of wavelengths while being configured to block electromagnetic radiation having other wavelengths. The optical element may be configured to block electromagnetic radiation having other wavelengths by reflecting and/or absorbing that radiation.

An associated advantage is that wavelengths of light emitted by the light source and reaching the dichroic mirror may be within the first wavelength interval, whereby light reaching the sample and the reference sample may have wavelengths within the first wavelength interval. A better determination of wavelengths of the light reaching the sample may allow for an improved identification and/or determination of the sample.

The system may further comprise: an optical longpass filter arranged between the dichroic mirror and the spectrometer such that the light scattered by the sample may be received at the entrance slit via the optical longpass filter; and wherein the optical longpass filter may be configured to transmit light having wavelengths within a fourth wavelength interval.

Within the context of this disclosure, the wording "optical longpass filter" should be construed as an optical element configured to transmit electromagnetic radiation having wavelengths longer than a cut-off wavelength while being configured to block electromagnetic radiation having wavelengths shorter than the cut-off wavelength. The optical element may be configured to block electromagnetic radiation having other wavelengths by reflecting and/or absorbing that radiation. Such optical element may, within the art, be referred to as a longpass edge filter.

An associated advantage is that light scattered by the sample and reaching the entrance slit of the spectrometer may be within a specific wavelength interval (i.e., the fourth wavelength interval). This may, in turn, allow for restricting light scattered by the sample to a portion of the light sensor of the spectrometer. This may allow for an improved detection and/or identification of the sample, since it may allow for the portion of the light sensor to mainly comprise light scattered by the sample.

The fourth wavelength interval may comprise wavelengths longer than a nominal wavelength of light emitted by the light source, and wherein the optical longpass filter may be configured to block a majority of wavelengths within the first wavelength interval.

Within the context of this disclosure, the wording "nominal wavelength of light emitted by the light source" should be construed as a wavelength of light which the light source is configured to emit. However, due to different processes (e.g., mode hopping) the actual wavelength of light emitted by the light source may be different from the nominal wavelength.

An associated advantage is that an intensity of light having wavelengths within the first wavelength interval and shorter reaching the first entrance slit may be reduced. Put differently, an intensity of light emitted by the light source and reflected by the sample towards the first entrance slit may be reduced since the optical longpass filter is configured to block that light. Further, an intensity of Rayleigh-scattered light and/or light associated with fluorescence emanating from the sample towards the first entrance slit may be reduced since the optical longpass filter is configured to block that light. Further, an intensity of light scattered by the sample via anti-Stokes Raman scattering may be reduced since the optical longpass filter is configured to block that light.

A further associated advantage is that light scattered by the sample and reaching the entrance slit of the spectrometer may pertain to Stokes Raman scattering of the sample. Hence, a portion of the light sensor associated with wavelengths longer than the excitation light may mainly comprise light scattered by the sample, which may, in turn, allow for an improved detection and/or identification of the sample.

The system may further comprise: a further dichroic mirror arranged in between the dichroic mirror and the spectrometer such that the light scattered by the sample may be transmitted through the further dichroic mirror prior to being received at the entrance slit, and such that the light scattered by the reference sample may be reflected by the further dichroic mirror prior to being received at the entrance slit.

The further dichroic mirror may be configured to transmit light having wavelengths within the second wavelength interval (i.e., light scattered by the sample), and to reflect light having wavelength associated with light scattered by the reference sample.

An associated advantage is that an intensity of light having a wavelength within the first wavelength interval reaching the entrance slit may be reduced. Put differently, an intensity of light emitted by the light source and reflected by the sample towards the entrance slit may be reduced since the further dichroic mirror is configured to reflect that light. Further, an intensity of Rayleigh-scattered light emanating from the sample towards the entrance slit may be reduced since the further dichroic mirror is configured to reflect that light. Furthermore, an intensity of light associated with fluorescence emanating from the sample may be reduced since the further dichroic mirror may be configured to reflect that light.

According to a second aspect, a method for compensating a Raman spectrum of a sample by a Raman spectrum of a reference sample is provided. The method comprising: emitting, from a light source, light having wavelengths within a first wavelength interval; reflecting, using a dichroic mirror, a first portion of the emitted light to illuminate the sample; transmitting, through the dichroic mirror, a second portion of the emitted light to illuminate the reference sample; transmitting, through the dichroic mirror, light scattered by the sample to an entrance slit of a spectrometer, wherein the light scattered by the sample has wavelengths within a second wavelength interval; conveying light scattered by the reference sample to the entrance slit of the spectrometer; determining, using the spectrometer, a signal comprising a first information pertaining to a Raman spectrum of the sample; determining, using the spectrometer, a second information pertaining to a Raman spectrum of the reference sample; and compensating the first information based on the second information.

The method may further comprise: determining a wavelength shift of the light emitted by the light source based on the second information; and wherein the act of compensating the first information based on the second information may comprise: compensating the first information based on the determined wavelength shift of the emitted light.

The above-mentioned features of the first aspect, when applicable, apply to this second aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Brief description of the drawings

The above and other aspects of the present inventive concept will now be described in more detail, with reference to appended drawings showing variants of the inventive concept. The figures should not be considered limiting the inventive concept to the specific variant; instead, they are used for explaining and understanding the inventive concept. As illustrated in the figures, the sizes of layers and regions are exaggerated for illustrative purposes and, thus, are provided to illustrate the general structures of variants of the present inventive concept. Like reference numerals refer to like elements throughout.

Figure 1 illustrates a system for Raman spectroscopy.
Figure 2 illustrates a first variant of an optical system of the system of Fig. 1.
Figure 3 illustrates a second variant of the optical system of the system of Fig. 1.
Figure 4 illustrates a third variant of the optical system of the system of Fig. 1.
Figure 5 is a block scheme of a method for compensating a Raman spectrum of a sample by a Raman spectrum of a reference sample.

Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

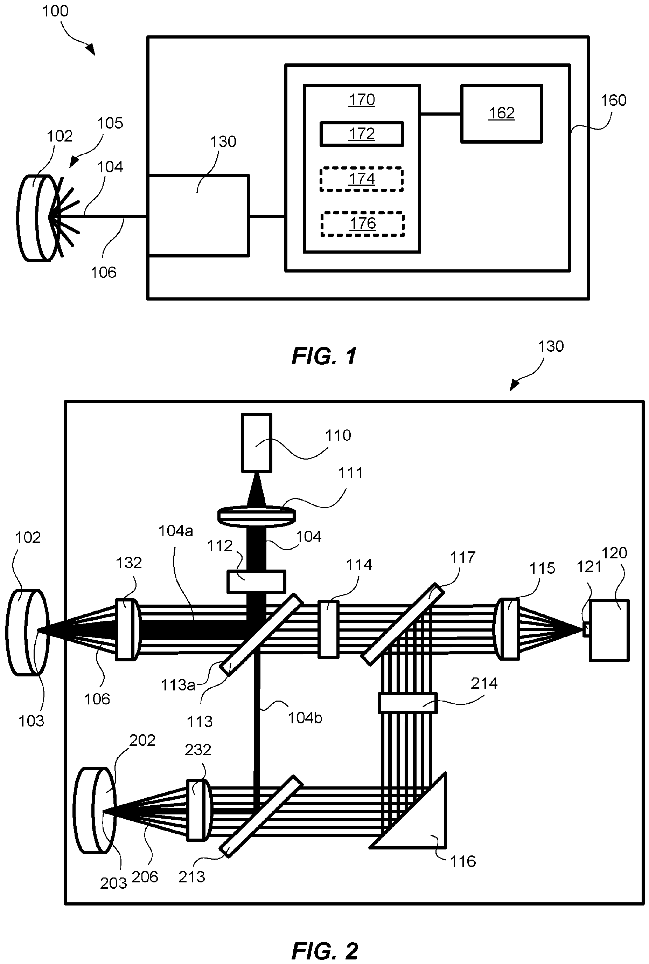

Figure 1 illustrates a system 100 for Raman spectroscopy. The system 100 comprises an optical system 130, and circuitry 160. Different variants of the optical system 130 are illustrated in Fig. 2 - Fig. 4 and will be discussed in more detail below. The system 100 of Fig. 1 may be a handheld system. Hence, the system 100 illustrated in Fig. 1 may be implemented as a single handheld system. It is to be understood that the system 100 may, even though they are not illustrated in Fig. 1, comprise further features, such as means for input (e.g., a touchscreen and/or buttons) and a display for illustrating information (e.g., results of measurements performed by the system 100, actions needed to be taken by the user, etc.) to a user of the system 100, etc. The skilled person realizes that the system 100 may, even though they may not be illustrated in Fig. 1, comprise further components/features, such as a housing/casing, and/or an internal and/or external power source (e.g., a battery). The housing/casing may comprise the system 100 for Raman spectroscopy illustrated in Fig. 1. The power source may supply power to the components of the system 100 illustrated in Fig. 1. The circuitry 160 may, as illustrated in Fig. 1, comprise a processing unit 162 and/or a memory 170. The processing unit 162 may be a processor. The processor may be a central processing unit. The memory 170 may be a non-transitory computer-readable storage medium. The memory 170 may comprise program code portions which, when executed by the processing unit 162 of the circuitry 160, performs a function of the circuitry 160. Hence, the circuitry 160 may be configured to perform or execute a specific function by the processing unit 162 being configured to execute program code portions stored on the memory 170 and corresponding to the specific function. One or more functions of the circuitry 160 may be implemented by one or more field-programmable gate arrays. It is to be understood that one or more functions of the circuitry 160 may be software and/or hardware implemented, or as a combination of software and hardware. For example, one or more functions may be implemented using one or more field-programmable gate arrays. The circuitry 160 may be configured to control one or more (e.g., all) functions of the system 100 of Fig. 1. The circuitry 160 may further comprise a transceiver (not illustrated in Fig. 1) configured to transmit and/or receive a communication signal. The transceiver may comprise a wired and/or a wireless connection. The transceiver may communicate via a wired and/or wireless communication standard. The skilled person would be aware of a plurality of different wired and/or wireless communication standards that would be suitable, such as Wi-Fi, Ethernet, cellular, USB, etc. The transceiver may be used to transmit data from and/or receive data to the circuitry 160. The data may be any data related to the system 100 for Raman spectroscopy, for example a spectrum measured using the system 100, databases, etc. The components within the circuitry 160 may communicate via a databus (not illustrated in Fig. 1). The circuitry 160 may communicate with other components via the databus. For instance, the processing unit 162 may communicate with the memory 170 via the databus. Further, the circuitry 160 may communicate with one or more components of the optical system 130 via the databus. The skilled person would be aware of other communication standards that would be suitable for the circuitry 160.

The system 100 of Fig. 1 is emitting light 104 towards a sample 102. The sample 102 scatters light 105. The sample 102 may scatter light isotropically or anisotropically. At least a portion 106 of the light scattered by the sample 102 may be collected by the system 100. As will be discussed further below, the optical system 130 of the system 100 for Raman spectroscopy may comprise optics configured such that the collected portion of the light 105 scattered by the sample 102 may be increased.

Different variants of the optical system 130 will now be described with reference to Fig. 2 - Fig. 4. As illustrated in Fig. 2 - Fig. 4, the optical system 130 comprises a dichroic mirror 113, a light source 110, a reference sample 202, and a spectrometer 120. As illustrated in the examples of Fig. 2 - Fig. 4, the optical system 130 may further comprise a first refractive element 111, an optical bandpass filter 112, a second refractive element 132, an optical longpass filter 114, an optical shortpass filter 214, a further dichroic mirror 117, and a third refractive element 115.

The spectrometer 120 comprises an entrance slit 121. The spectrometer 120 may comprise a dispersive element and a light sensor. The spectrometer 120 may comprise further optical components configured to image the entrance slit 121 onto the light sensor of the spectrometer 120. Spectrometers and their functionality is well known within the art. However, a spectrometer may be shortly described as follows. The dispersive element of the spectrometer 120 may be configured to disperse light such that different wavelengths of light incident on the entrance slit 121 of the spectrometer 120 may be incident on different portions of the light sensor of the spectrometer 120. The spectrometer 120 may have a Czerny-Turner configuration. Hence, the spectrometer 120 is configured to direct, via the dispersive element, light entering through the entrance slit 121 to the light sensor of the spectrometer. A signal may be determined from the dispersed light incident on the light sensor of the spectrometer 120. The determined signal may be a spectrum of light received by the spectrometer 120 via the entrance slit 121.

As is seen in the examples of Fig. 2 - Fig. 4, the light source 110 is configured to illuminate the dichroic mirror 113 with light 104 having wavelengths within a first wavelength interval. The light source 110 may be configured to emit light 104 having wavelengths within the first wavelength interval. The first wavelength interval may preferably be a narrow wavelength interval ($\pm$ 10 nm). The light source 110 may be configured to emit monochromatic light. The light source 110 may be configured to emit coherent light. The light source 110 may be a laser. The light source 110 may be a Fabry-Perot laser diode. The Fabry-Perot laser diode may be configured to emit light having wavelengths in the near infrared region. Light having wavelengths in the near infrared region may reduce fluorescence of the sample 102 while a strong Raman signal from the sample 102 may be acquired. The light source 110 may be configured to emit light 104 having wavelengths within an interval from about 750 nm to about 850 nm. The light source 110 may be configured to emit light 104 having a wavelength of about 785 nm. As is illustrated in Fig. 2 - Fig. 4, the light source 110 may be configured to illuminate the dichroic mirror 113 via the first refractive element 111. The first refractive element 111 may be a focusing optical element. The first refractive element 111 may, e.g., be a lens configured to reduce a divergence of light 104 emitted by the light source 110. Hence, as is illustrated in the examples of Fig. 2 - Fig. 4, the light 104 emitted by the light source 110 may be substantially collimated after being transmitted through the first refractive element 111. As is illustrated in Fig. 2 - Fig. 4, the optical bandpass filter 112 may be arranged between the light source 110 and the dichroic mirror 113 such that the light source 110 may illuminate the dichroic mirror 113 via the optical bandpass filter 112. The optical bandpass filter 112 may be configured to transmit light having wavelengths within the first wavelength interval. The optical bandpass filter 112 may be an optical element configured to selectively transmit light having wavelengths within a range of wavelengths while being configured to block (e.g., reflecting and/or absorbing) light having other wavelengths. Hence, electromagnetic radiation emitted by the light source 110 having wavelengths outside of the first wavelength interval may thereby be blocked by the optical bandpass filter 112. Such electromagnetic radiation may, e.g., pertain to lower-level transitions in the lasing medium and/or secondary emissions of the light source 110 (in case the light source 110 is a laser).

The dichroic mirror 113 is configured to reflect a first portion 104a of light having wavelengths within the first wavelength interval and to transmit a second portion 104b of light having wavelengths within the first wavelength interval. The first portion 104a of light may be relatively larger than the second portion 104b of light. The first portion 104a of light having wavelengths within the first wavelength interval reflected by the dichroic mirror 113 may be about 95 % of the light having wavelengths within the first wavelength interval incident on the dichroic mirror 113. The second portion 104b of light having wavelengths within the first wavelength interval transmitted through the dichroic mirror 113 may be about 5 % of the light having wavelengths within the first wavelength interval incident on the dichroic mirror 113. Put differently, the dichroic mirror 113 may be configured to reflect a major portion of light having wavelengths within the first wavelength interval and to transmit a minor portion of light having wavelengths within the first wavelength interval. Hence, the dichroic mirror 113 may be configured to reflect a major portion of light from the light source 110 and to transmit a minor portion of light from the light source 110. Light of the first portion 104a may be reflected by a frontside 113a of the dichroic mirror 113. The dichroic mirror 113 is further configured to reflect light of the first portion 104a to illuminate the sample 102. The second refractive element 132 may, as illustrated in the examples of Fig. 2 - Fig. 4, be arranged such that the light of the first portion 104a reflected by the dichroic mirror 113 may be refracted prior to reaching the sample 102. The second refractive element 132 may be a focusing optical element. The second refractive element 132 may be a lens configured to focus the light of the first portion 104a reflected by the dichroic mirror 113 to a sampling position 103. At the sampling position 103, a spot size of the light refracted by the second refractive element 132 may be smaller than 20 μm. The second refractive element 132 may have an adjustable focal length, whereby a position (e.g., a longitudinal position) of the sampling position 103 may be adjusted by adjusting the focal length of the second refractive element 132. The second refractive element 132 may comprise a plurality of individual lenses, and the focal length of the second refractive element 132 may thereby be adjusted by adjusting relative positions of the lenses of the plurality of lenses. The second refractive element 132 may be a liquid lens, and a focal length of the liquid lens may be adjusted by varying a voltage across the liquid lens. In response to an applied voltage, a curvature of the liquid lens may change, whereby the focal length of the liquid lens may change. The dichroic mirror 113 is further configured to transmit light of the second portion 104b to illuminate a reference sample 202. The reference sample 202 scatters light upon being illuminated with light. The reference sample 202 may scatter light isotropically and/or anisotropically. The reference sample 202 may scatter light via Raman scattering. The reference sample 202 may be chemically stable, and the light 206 scattered by the reference sample 202 may therefore have a stable spectrum (e.g., Raman spectrum). The stable spectrum of light 206 scattered by the reference sample 202 may be stable over time. The reference sample 202 may comprise a reference substance. The reference sample 202 may comprise Sulphur and/or $TiO_2$. The reference sample 202 may have a predetermined and/or well-known spectral response to incident light having wavelengths within the first wavelength interval. The well-known spectral response of the reference sample 202 may be a Raman spectrum. The well-known spectral response of the reference sample 202 may be Raman shifts of the reference sample 202. The dichroic mirror 113 may thereby be configured to reflect the first portion 104a of light such that the sample 102 is illuminated with light from the light source 110, and to transmit light of the second portion 104b such that the reference sample is illuminated with light from the light source 110.

The sample 102 scatters light upon being illuminated with light 104a from the light source 110 having wavelengths within the first wavelength interval. The light 106 scattered by the sample 102 may be refracted by the second refractive element 132 such that the refracted scattered light is directed towards the dichroic mirror 113. After being refracted by the second refractive element 132, the light scattered by the sample 102 may be more collimated. The second refractive element 132 may be arranged such that the portion of light scattered by the sample 102 that reaches the entrance slit 121 of the spectrometer 120 may be larger compared to a variant not comprising the second refractive element 132. The light scattered by the sample 102 has wavelengths within a second wavelength interval. The sample 102 may scatter light via Raman scattering. Wavelengths of light scattered by the sample 102 via Raman scattering may be within the second wavelength interval. The second wavelength interval may comprise wavelengths associated with one or more of Stokes Raman scattering, anti-Stokes Raman scattering, and Rayleigh scattering. The second wavelength interval may comprise the first wavelength interval. This since Rayleigh scattering may be an elastic scattering process. Hence, wavelengths associated with light scattered by the sample 102 via Rayleigh scattering may be within the first wavelength interval. However, wavelengths associated with light scattered by the sample 102 via Stokes Raman scattering and/or anti-Stokes Raman scattering may be outside of the first wavelength interval. Hence, the dichroic mirror 113 may be configured to transmit light having wavelengths associated with light scattered by the sample 102 via Stokes Raman scattering and/or anti-Stokes Raman scattering. Upon being illuminated with light, the sample 102 may further reflect the light and/or emit light via fluorescence. A wavelength of light being reflected may be unaffected by the sample 102, and light reflected by the sample 102 may thereby have a wavelength within the first wavelength interval. Light reflected by the sample 102 reaching the dichroic mirror 113 may thereby be reflected by the dichroic mirror 113.

The dichroic mirror 113 is further configured to transmit light having wavelengths within the second wavelength interval. Hence, the dichroic mirror 113 is further configured to transmit light 106 scattered by the sample 102. Put differently, the dichroic mirror 113 may be further configured to transmit light being scattered 106 by the sample 102 via Raman scattering. In particular, the dichroic mirror 113 may be configured to transmit light having wavelengths associated with light scattered by the sample 102 via Stokes Raman scattering and/or anti-Stokes Raman scattering. It is to be understood that the dichroic mirror 113 may be configured to transmit a major portion of light having wavelengths within the second wavelength interval and to reflect a minor portion of light having wavelengths within the second wavelength interval. The reflected portion of light having wavelengths within the second wavelength interval may be small, preferably as small as possible, compared to the transmitted portion of light having wavelengths within the second wavelength interval.

As is illustrated in Fig. 2 - Fig. 4, the spectrometer 120 is configured to receive, at the entrance slit 121, light 106 scattered by the sample 102 and light 206 scattered by the reference sample 202. Hence, the light 106 scattered by the sample 102 and the light 206 scattered by the reference sample 202 may be directed to the light sensor 126 of the spectrometer 120. Therefore, a signal of the light sensor 126 comprises a first information pertaining to a Raman spectrum of the sample 102 and a second information pertaining to a Raman spectrum of the reference sample 202. As is illustrated in Fig. 2 - Fig. 4, the further dichroic mirror 117 may be arranged in between the dichroic mirror 113 and the spectrometer 120 such that the light 106 scattered by the sample 102 may be transmitted through the further dichroic mirror 117 prior to being received at the entrance slit 121, and such that the light 206 scattered by the reference sample 202 may be reflected by the further dichroic mirror 117 prior to being received at the entrance slit 121. Put differently, the further dichroic mirror 117 may be configured to transmit light 106 scattered by the sample 102, thereby allowing that light 106 to reach the entrance slit 121, and to reflect light 206 scattered by the reference sample 202, thereby allowing that light 206 to reach the entrance slit 121. The further dichroic mirror 117 may be advantageous in that an intensity of light having a wavelength within the first wavelength interval and reaching the entrance slit 121 may be reduced. Put differently, an intensity of light 104 emitted by the light source 110 and reflected by the sample 106 towards the entrance slit 121 may be reduced since the further dichroic mirror 117 may be configured to reflect that light. Further, an intensity of Rayleigh-scattered light emanating from the sample 102 towards the entrance slit 121 may be reduced since the further dichroic mirror 117 may be configured to reflect that light. Furthermore, an intensity of light associated with fluorescence emanating from the sample 102 may be reduced since the further dichroic mirror 117 may be configured to reflect that light.

As illustrated in Fig. 2 - Fig. 4, the optical longpass filter 114 may be arranged between the dichroic mirror 113 and the spectrometer 120 such that the light 106 scattered by the sample 102 may be received at the entrance slit 121 via the optical longpass filter 114. The optical longpass filter 114 may be configured to transmit light having wavelengths within a fourth wavelength interval. The fourth wavelength interval may comprise wavelengths longer than a nominal wavelength of light 104 emitted by the light source 110. The optical longpass filter 114 may further be configured to block a majority of wavelengths within the first wavelength interval. The optical longpass filter 114 may be an optical element configured to transmit electromagnetic radiation having wavelengths longer than a cut-off wavelength while being configured to block (e.g., by reflecting and/or absorbing) electromagnetic radiation having wavelengths shorter than the cut-off wavelength. Preferably, the optical longpass filter 114 may be chosen such that the cut-off wavelength of the optical longpass filter 114 is longer than wavelengths of light 104 emitted by the light source 110, and shorter than wavelengths associated with light scattered 106 by the sample 102 via Raman scattering, in particular via Stokes Raman scattering. Hence, intensities of light having wavelengths within the first wavelength interval or shorter reaching the entrance slit 121 may be reduced. Put differently, an intensity of light 104 emitted by the light source 110 and reflected by the sample 102 towards the entrance slit 121 may be reduced since the optical longpass filter 114 is configured to block that light. Further, an intensity of Rayleigh-scattered light and/or light associated with fluorescence emanating from the sample 102 towards the entrance slit 121 may be reduced since the optical longpass filter 114 is configured to block that light. Further, by using the optical longpass filter 114, light 106 scattered by the sample 102 and reaching the entrance slit 121 of the spectrometer 120 may pertain to Stokes Raman scattering of the sample 102. Hence, a portion of the light sensor associated with wavelengths longer than the excitation light may mainly comprise light scattered by the sample 102, which may, in turn, allow for an improved detection and/or identification of the sample 102.

As is further illustrated in Fig. 2 - Fig. 4, the third refractive element 115 may be arranged such that light 106 scattered by the sample 102 and light scattered 206 by the reference sample 202 may be refracted prior to reaching the entrance slit 121. The third refractive element 115 may be a focusing optical element. The third refractive element 115 may be a lens configured to focus light on the entrance slit 121.

As is seen in Fig. 2 - Fig. 4, the optical shortpass filter 214 may be arranged between the reference sample 202 and the spectrometer 120 such that the light 206 scattered by the reference sample 202 may be received at the entrance slit 121 via the optical shortpass filter 214. The optical shortpass filter 214 may be configured to transmit light having wavelengths within a third wavelength interval. The third wavelength interval may comprise wavelengths shorter than a nominal wavelength of light 104 emitted by the light source 110, and wherein the optical shortpass filter 214 may be configured to block a majority of wavelengths within the first wavelength interval. The optical shortpass filter 214 may be an optical element configured to transmit electromagnetic radiation having wavelengths shorter than a cut-off wavelength while being configured to block electromagnetic radiation having wavelengths longer than the cut-off wavelength. The optical element may be configured to block electromagnetic radiation having other wavelengths by reflecting and/or absorbing that radiation. Such optical element may, within the art, be referred to as a shortpass edge filter. Hence, light 206 scattered by the reference sample 202 and reaching the entrance slit 121 of the spectrometer 120 may be within a specific wavelength interval (i.e., the third wavelength interval). This may, in turn, allow for restricting light 206 scattered by the reference sample and reaching the entrance slit 121 to a portion of the light sensor of the spectrometer 120. This may allow for an improved detection of the Raman spectrum of the reference sample 202. This may, in turn, allow for an improved determination of wavelengths of light 104 emitted by the light source 110. Hence, this may allow for an improved detection and/or identification of the sample 102, since it may, e.g., allow for a different portion of the light sensor to mainly comprise light 106 scattered by the sample 102. In particular, in case the third wavelength interval comprises wavelengths shorter than the nominal wavelength of light 104 emitted by the light source 110, light 206 scattered by the reference sample 202 and reaching the entrance slit 121 of the spectrometer 120 may pertain to anti-Stokes Raman scattering of the reference sample 202. Since light pertaining to anti-Stokes Raman scattering have wavelengths shorter than the excitation light (i.e., light 104 emitted by the light source 110), no light scattered by the reference sample 202 via Rayleigh scattering and/or Stokes Raman scattering may reach the light sensor of the spectrometer 120. Hence, a portion of the light sensor associated with wavelengths longer than the excitation light may mainly comprise light 106 scattered by the sample 102. This may, in turn, allow for an improved detection and/or identification of the sample 102, since the light on the portion of the light sensor associated with wavelengths longer than the excitation light may mainly be associated with light 106 scattered by the sample 102. This may, in particular, be advantageous in case the system 100 further comprises the optical longpass filter 114 and the optical shortpass filter 214. In such case, the spectrum detected by the spectrometer 120 may comprise a first portion corresponding to wavelengths longer than the nominal wavelength of light 104 emitted by the light source 110 and a second portion corresponding to wavelengths shorter than the nominal wavelength of light 104 emitted by the light source 110. The first portion of the spectrum may thereby comprise information (i.e., the first information) pertaining to light 106 scattered by the sample 102 via Stokes Raman scattering, and the second portion (i.e., the second information) of the spectrum may thereby comprise information pertaining to light 206 scattered by the reference sample 202 via anti-Stokes Raman scattering. Put differently, the recorded Raman spectrum of the sample 102 and the recorded Raman spectrum of the reference sample 202 may not overlap on the light sensor of the spectrometer 120, whereby the determination of the first information and/or the second information may be enhanced.

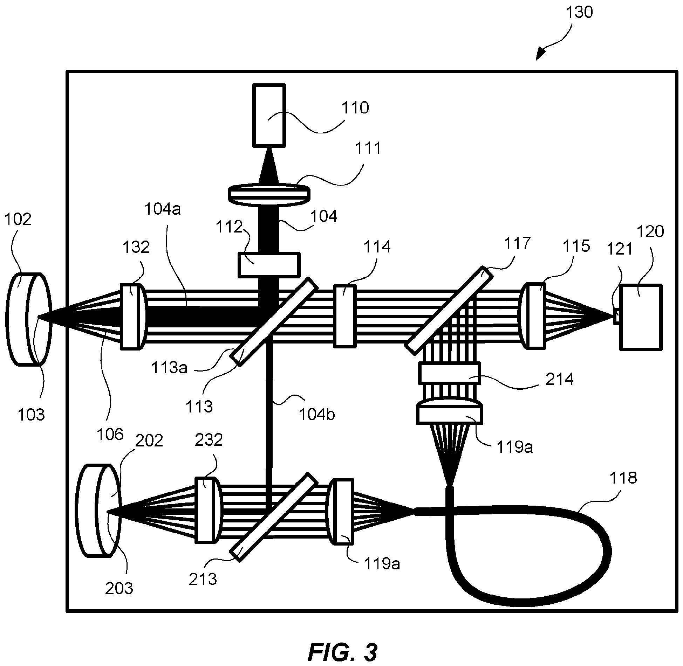

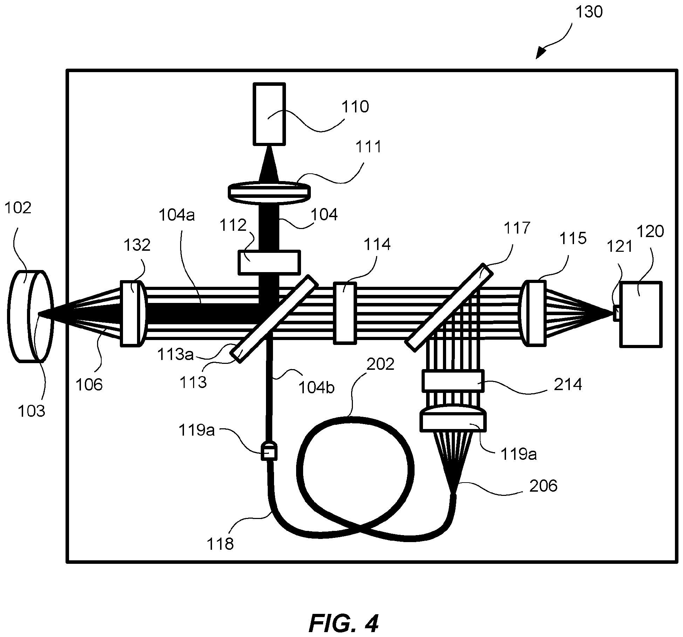

A plurality of different ways of illuminating the reference sample 202 with light of the second portion 104b and conveying the light 206 scattered by the reference sample 202 to the entrance slit 121 of the spectrometer 120 may be available to the skilled person. A first variant will be described with reference to Fig. 2, and additional variants will be described in connection to Fig. 3 and Fig. 4.

As illustrated in Fig. 2, the second portion 104b of light transmitted through the dichroic mirror 113 may illuminate the reference sample 202 via an additional dichroic mirror 213 and a fourth refractive element 232. The additional dichroic mirror 213 may be similar to the dichroic mirror 113. The additional dichroic mirror 213 may be configured to reflect light having wavelengths within the first wavelength interval and to transmit light having wavelengths associated with a Raman spectrum of the reference sample 202. Hence, the additional dichroic mirror may be configured to reflect light of the second portion 104b and to transmit light 206 scattered by the reference sample 202. As is illustrated in Fig. 2, the light 206 scattered by the reference sample 202 may be reflected by a reflective element 116. The reflective element 116 may be an optical element configured to reflect incident electromagnetic radiation. The reflective element 116 may be configured to reflect light having wavelengths within a large range of wavelengths. An example of such a reflective element 116 may be a silver-coated mirror. The reflective element 116 may be configured to reflect light having wavelengths within a narrow range of wavelengths. An example of such a reflective element 116 may be a dielectric mirror. The reflective element 116 may be configured such that light reflected by the reflective element 116 is reflected by the further dichroic mirror 117. As is further illustrated in Fig. 2, the optical shortpass filter 214 may be arranged between the reflective element 116 and the further dichroic mirror 117 such that light the light reflected by the reflective element 116 may reach the further dichroic mirror 117 via the optical shortpass filter 214. The further dichroic mirror 117 may be arranged such that light 206 scattered by the reference sample 202 and incident on the further dichroic mirror 117 may be received at the entrance slit 121 of the spectrometer 120. The further dichroic mirror 117 may be configured to reflect light having wavelengths associated with the Raman spectrum of the reference sample 202. In particular, the further dichroic mirror 117 may be configured to reflect light having wavelengths within the third wavelength interval. Light 206 scattered by the reference sample 202 via anti-Stokes Raman scattering may have wavelengths within the third wavelength interval. Put differently, using the optical shortpass filter 214, light 206 scattered by the reference sample 202 and reaching the entrance slit 121 may be associated with light 206 scattered by the reference sample 202 via anti-Stokes Raman scattering. The fourth refractive element 232 may be similar to the second refractive element 132. Hence, the fourth refractive element 232 may be configured to focus light of the second portion 104b to a reference measurement point 203 on the reference sample 202. The fourth refractive element 232 may be further configured to collect light 206 scattered by the reference sample 202 such that a portion of the light 206 scattered by the reference sample 202 reaching the entrance slit 121 of the spectrometer 120 may be increased. For instance, the fourth refractive element 232 may be configured such that the light 206 scattered by the reference sample 202 after being refracted by the fourth refractive element 232 may be more collimated.

A second variant of the optical system 130 is illustrated in Fig. 3. As illustrated in Fig. 3, the optical system 130 may further comprise an optical fiber 118. The optical fiber 118 may be configured to convey the light 206 scattered by the reference sample 202 to the entrance slit 121. Put differently, the optical fiber 118 may be used instead of the reflective element 116 of in Fig. 2. In order to enhance coupling light into and out of the optical fiber 118, the optical system 130 may comprise an in-coupling optical element 119a and/or an out-coupling optical element 119b. The in-coupling optical element 119a and/or the out-coupling optical element 119b may be a refractive optical element, such as one or more optical lenses. The in-coupling optical element 119a may, as illustrated in Fig. 3, be configured to focus light 206 scattered by the reference sample 202 onto an input side of the optical fiber 118. The out-coupling optical element 119b may, as illustrated in Fig. 3, be configured to reduce a divergence of light output from an output side of the optical fiber 118. Preferably, the light 206 scattered by the reference sample 202 may be substantially collimated after being refracted by the out-coupling optical element 119b. By using an optical fiber 118, the system 100 may be more compact and/or robust. In Fig. 3, the optical shortpass filter 214 is arranged downstream of the optical fiber 118. However, it is to be understood that the optical shortpass filter 214 may be arranged upstream of the optical fiber 118. The components of this second variant of the optical system 130 prior to, and after, the optical fiber 118 are similar to the first variant of the optical system 130 discussed above, and this discussion is therefore not repeated here.

A third variant is illustrated in Fig. 4. As is illustrated in Fig. 4, the optical fiber 118 may comprise the reference sample 202. Hence, an optical fiber 118 comprising the reference sample 202 may be used instead of one or more of the additional dichroic mirror 213, the fourth refractive element 232, and the reference sample 202 of Fig. 3. For example, the optical fiber 118 may comprise the reference sample 202 in a core and/or a cladding of the optical fiber 118. Light propagating through the optical fiber 118 may be scattered by the reference sample 202 in the core and/or cladding of the optical fiber 118, and light output from the optical fiber 118 may thereby comprise light scattered by the reference sample 202. The optical fiber 118 may comprise a chemically stable and Raman active reference substance. The reference substance may comprise Sulphur and/or $TiO_2$. An example of such optical fiber may be an PMMA-$TiO_2$ core-shell fiber. This may allow for an improved exposure of the reference sample to light 104b emitted by the light source 110 and transmitted through the dichroic mirror 113, which may, in turn, allow for a stronger signal relating to the Raman spectrum of the reference sample 202. It may further allow for an improved collection of light 206 scattered by the reference sample 202. The optical fiber may, for example, be a surface-enhanced Raman spectroscopy, SERS, fiber. The SERS fiber may comprise the reference sample 202 and/or reference substance as discussed above and may further comprise nanoparticles configured to enhance a Raman signal from the reference sample 202 and/or reference substance. The optical fiber 118 may be arranged such that the reference sample 202 surrounds at least a portion of an outside of the optical fiber 118, and light propagating through the optical fiber 118 may interact (i.e., scatter) with the reference sample 202 surrounding at least a portion of the outside of the optical fiber 118. As the other components of the third variant of the optical system 130 may be similar to those of the first and second variants, that discussion is not repeated here.

Turning back to Fig. 1, the circuitry 160 is configured to execute a determination function 172. The determination function 172 is configured to determine, using the spectrometer 120, a signal comprising a first information pertaining to a Raman spectrum of the sample 102 and a second information pertaining to a Raman spectrum of the reference sample 202. The first information is thereby allowed to be compensated by means of the second information. Hence, information associated with a Raman spectrum of the sample 102 and information associated with a wavelength of excitation light (i.e., light 104 emitted by the light source 110) is captured using a single spectrometer 120 having a single entrance slit. A more complex spectrometer having more than one entrance slit may thereby be avoided. The intensity of light 104 emitted by the light source 110 is typically substantially higher than light associated with Raman scattering and in case that light would be incident directly onto the light sensor of the spectrometer 120, the light sensor would not be able to simultaneously detect light 106 scattered by the sample 102 and the excitation light. This is due to the intensity of the excitation light being substantially higher than the intensity of light 106 scattered by the sample 102. An exposure time of the light sensor of the spectrometer 120 may be adjusted such that the excitation light is properly detected, however, since the intensity of light 106 scattered by the sample 102 is substantially lower, light 106 scattered by the sample 102 would not be detected by the light sensor of the spectrometer 120 using that exposure time. The exposure time of the light sensor of the spectrometer 120 may be adjusted such that light 106 scattered by the sample 102 is properly detected, however, since the intensity of the excitation light is substantially higher, that light would overexpose the light sensor of the spectrometer 120 and would therefore not be properly detected. Hence, by directing the second portion 104b of light (i.e., a portion of light 104 emitted by the light source 110 and transmitted through the dichroic mirror 113) to the reference sample 202, whereby light is scattered by the reference sample 202, that light 206 scattered by the reference sample 202 may have intensities more similar to intensities of light 106 scattered by the sample 102. This, in turn, allows the light 106 scattered by the sample 102 and light 206 scattered by the reference sample 202 to be properly detected by the same light sensor of the spectrometer 120. Since the spectral response (e.g., the spectrum and/or Raman spectrum) of the reference sample 202 is known, the light 206 scattered by the reference sample 202 may be used to determine wavelengths of light 104 emitted by the light source 110. Put differently, since the Raman shifts of the reference sample 206 are known, the Raman spectrum (e.g., the anti-Stokes band and/or the Stokes band) of the reference sample 202 may be used to determine wavelengths of light 104 emitted by the light source 110. This may be further advantageous since peaks associated with Raman shifts in the Raman spectrum of the reference sample 202 may be sharp spectral lines, whereby a spectral resolution of the determined wavelengths of light 104 emitted by the light source 110 may be enhanced. For example, in case wavelengths of light 104 emitted by the light source 110 shift from its nominal wavelengths during a measurement, the Raman peaks of the spectrum of the reference sample 202 can provide information of current wavelengths of light 104 emitted by the light source 110. Using this information, a measurement spectrum (i.e., the first information) may be compensated accordingly. Further, since information regarding the wavelength of light 104 emitted by the light source 110 is captured, this information may be used to determine variations in wavelength and/or intensity of the excitation light. This information may then be used to, e.g., compensate the recorded Raman spectrum of the sample 102 for drifts or variations in wavelength and/or intensity of the excitation light. The drifts or variations in wavelength of light 104 emitted by the light source 110 may, e.g., be an effect of mode hopping of the light source 110. Mode hopping is a behavior that may occur for a light source, for example Fabry-Perot laser diodes, which may abruptly change wavelengths of light 104 emitted by the light source 110. Hence, the present system 100 for Raman spectroscopy may allow for compensating the recorded Raman spectrum of the sample 102 for effects of mode hopping in the light source 110.

The circuitry 160 may be further configured to execute a compensation function 174. The compensation function 174 may be configured to compensate the first information based on the second information. The compensation function 174 may be configured to compensate the first information based on the second information by being configured to determine a wavelength shift of light 104 emitted by the light source 110 based on the second information and compensate the first information based on the determined wavelength shift of the light 104 emitted by the light source 110. Hence, the compensation function 174 may be configured to compensate the recorded Raman spectrum of the sample 102 (i.e., the first information) by the determined wavelength shift of the light 104 emitted by the light source 110. The compensation function 174 may be configured to compensate the first information based on the second information by recalculating the first information (i.e., the recorded Raman spectrum of the sample 102) based on the determined wavelength and/or the determined wavelength shift of the light 104 emitted by the light source 110.

Since the spectral response (e.g., Raman shifts) of the reference sample 206 is known, the recorded Raman spectrum (i.e., the second information) of the reference sample 206 may be used to determine wavelengths of light incident on, and scattered by, the reference sample 206. Put differently, by knowing the spectral response of the reference sample 206, the second information may be used to determine a wavelength of light 104 emitted by the light source 110. Since the first information pertains to the Raman spectrum of the sample 102, the first information may be affected by variations in wavelengths and/or intensity of light 104 emitted by the light source 110. For example, since wavelengths of peaks of the Raman spectrum of the sample 102 may depend on the wavelength of light 104a illuminating the sample 102 (i.e., the first portion of light reflected by the dichroic mirror 113), variations in the light 104 emitted by the light source 110 may affect the wavelengths of the peaks of the recorded Raman spectrum of the sample 102. In case the variations of the wavelengths of the light 104 emitted by the light source 110 are known (e.g., from the second information determined by the determination function 172), the peaks of the recorded Raman spectrum (i.e., the first information) of the sample 102 may be compensated to account for such variations. The relation between wavelengths of the peaks of the Raman spectrum and wavelengths of the light illuminating the sample may be given by:

$$\lambda[\mathrm{nm}] = \frac{1}{\dfrac{1}{\lambda_0[\mathrm{nm}]} - \dfrac{\Delta\sigma[\mathrm{cm}^{-1}]}{10^7}}.$$

$$(1)$$

In Eq. 1 above, $\lambda$ is the wavelength in nm ($10^{-9}$ m) of a peak in the Raman spectrum having a Raman shift $\Delta\sigma$ in cm$^{-1}$, and $\lambda_0$ is a wavelength in nm of light used as excitation light. Hence, by knowing $\Delta\sigma$ for one or more Raman peaks of the reference sample and determining $\lambda$ from the second information (i.e., the Raman spectrum of the reference sample) for those Raman peaks, the wavelength $\lambda_0$ of light 104 emitted by the light source 110 may be determined. The wavelength shift of light 104 emitted by the light source 110 may thereby be determined as a difference between the nominal wavelength of light emitted by the light source 110 and the determined actual wavelength $\lambda_0$ of light emitted by the light source 110. Since the peaks of the recorded Raman spectrum (i.e., the first information) may be used to identify substances in the sample 102, the compensation may allow for a more reliable identification of substances in the sample 102. The compensation function 174 may be configured to shift the recorded Raman spectrum of the sample 102 (i.e., the first information) in wavelength to compensate for the determined wavelength shift of light 104 emitted by the light source 110. Since a majority of features (e.g., peaks) of the recorded Raman spectrum (i.e., the first information) may be equally affected, the entire recorded Raman spectrum may be shifted to compensate for the determined wavelength shift. This may be implemented via a Fourier transform function which may be configured to transform the first information into the Fourier domain, adjust phases, and return the Fourier transformed first information to the spectral domain.

The compensation function 174 may be configured to compensate the first signal by discarding the determined first signal in response to the second signal being outside a predetermined wavelength interval. Put differently, the compensation function 174 may be configured to discard the recorded spectrum of the sample 102 in response to a determined wavelength of light 104 emitted by the light source 110 being outside the predetermined wavelength interval. The predetermined wavelength interval may be an interval centered about the nominal wavelength of light 104 emitted by the light source 110. The predetermined wavelength interval may be between 1 % - 10 % of the nominal wavelength of light 104 emitted by the light source 110. The system 100 for Raman spectroscopy may, in such case, automatically repeat the measurement. Alternatively, or additionally, a user of the system 100 for Raman spectroscopy may be prompted (e.g., by a message on a display and/or by activation of an indication light) to repeat the measurement. Hence, the first information may be compensated for variations or drifts in wavelength and/or intensity of light 104 emitted by the light source 110. This may, in turn, allow for the recorded Raman spectrum of the sample 102 to be compensated for mode hopping in the light source 110. Mode hopping is a behavior that may occur for Fabry-Perot laser diodes, which may abruptly change wavelengths of light emitted by the Fabry-Perot laser diode. Hence, the present system 100 for Raman spectroscopy may allow for compensating the recorded Raman spectrum due to the effects of mode hopping in the light source 110.

The circuitry 160 may be further configured to execute a sample identification function 176. The sample identification function 176 may be configured to compare the recorded Raman spectrum of the sample 102 and/or the compensated recorded Raman spectrum of the sample 102 with a database comprising entries correlating Raman spectra with substances. One or more substances of the sample 102 may thereby be identified using the system 100 for Raman spectroscopy.

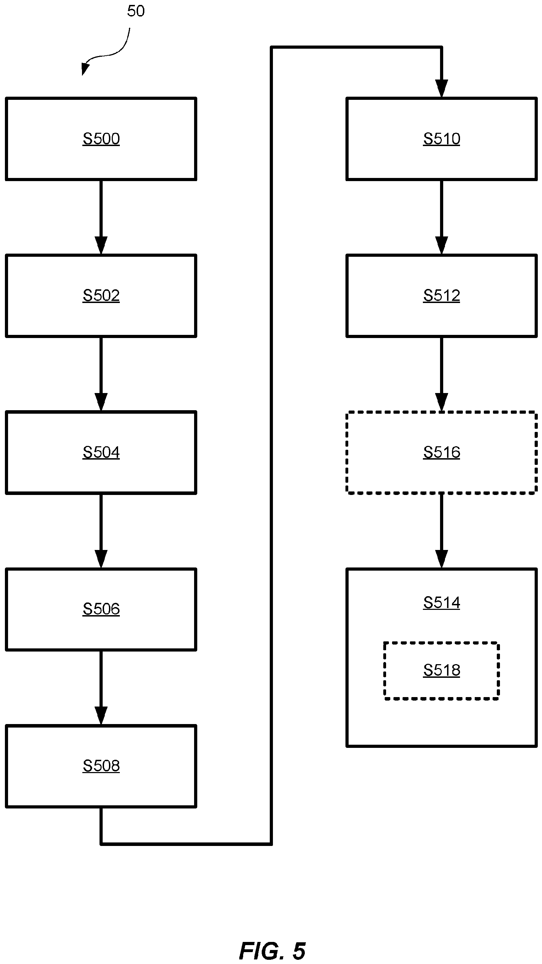

Figure 5 is a block scheme of a method 50 for compensating a Raman spectrum of a sample 102 by a Raman spectrum of a reference sample 202. The method 50 comprises: emitting S500, from a light source 110, light 104 having wavelengths within a first wavelength interval; reflecting S502, using a dichroic mirror 113, a first portion 104a of the emitted light to illuminate the sample 102; transmitting S504, through the dichroic mirror 113, a second portion 104b of the emitted light to illuminate the reference sample 202; transmitting S506, through the dichroic mirror 113, light 106 scattered by the sample 102 to an entrance slit 121 of a spectrometer 120, wherein the light 106 scattered by the sample 102 has wavelengths within a second wavelength interval; conveying S508 light 206 scattered by the reference sample 202 to the entrance slit 121 of the spectrometer 120; determining S510, using the spectrometer 120, a signal comprising a first information pertaining to a Raman spectrum of the sample 102; determining S512, using the spectrometer 120, a second information pertaining to a Raman spectrum of the reference sample 202; and compensating S514 the first information based on the second information. The method 50 may further comprise: determining S516 a wavelength shift of the light 104 emitted by the light source 110 based on the second information. The act of compensating S514 the first information based on the second information may comprise: compensating S518 the first information based on the determined wavelength shift of the emitted light.

The person skilled in the art realizes that the present inventive concept by no means is limited to the preferred variants described above. On the contrary, many modifications and variations are possible within the scope of the appended claims.

For example, the spectrometer is described as having one entrance slit. However, it is to be understood that the spectrometer may have more than one entrance slits. A first of the more than one entrance slits may be configured to receive light scattered by the sample, and a second of the more than one entrance slits may be configured to receive light scattered by the reference sample. Each entrance slit may be imaged onto separate portions of an image sensor of the spectrometer, allowing a larger separation in the recorded spectrum between light scattered by the sample and light scattered by the reference sample. Additionally, variations to the disclosed variants can be understood and effected by the skilled person in practicing the claimed invention, from a study of the drawings, the disclosure, and the appended claims.

**Claims**

1. A system (100) for Raman spectroscopy comprising:

   a dichroic mirror (113) configured to reflect a first portion (104a) of light having wavelengths within a first wavelength interval and to transmit a second portion (104b) of light having wavelengths within the first wavelength interval, and to transmit light having wavelengths within a second wavelength interval; and
   a light source (110) configured to illuminate the dichroic mirror (113) with light having wavelengths within the first wavelength interval;
   wherein the dichroic mirror (113) is configured to reflect light of the first portion (104a) to illuminate a sample (102) and to transmit light of the second portion (104b) to illuminate a reference sample (202), and wherein the dichroic mirror (113) is further configured to transmit light scattered (106) by the sample (102) having wavelengths within the second wavelength interval;
   the system (100) further comprising:

      a spectrometer (120) comprising an entrance slit (121) configured to receive light (106) scattered by the sample (102) and light (206) scattered by the reference sample (202); and
      circuitry (160) configured to execute:
      a determination function (172) configured to determine, using the spectrometer (120), a signal comprising a first information pertaining to a Raman spectrum of the sample (102) and a second information pertaining to a Raman spectrum of the reference sample (202), thereby allowing the first information to be compensated by means of the second information.

2. The system (100) according to claim 1, wherein the system (100) is a handheld system for Raman spectroscopy.

3. The system (100) according to claim 1 or 2, wherein the circuitry (160) is further configured to execute:
   a compensation function (174) configured to compensate the first information based on the second information.

4. The system (100) according to claim 3, wherein the compensation function (174) is configured to compensate the first information based on the second information by being configured to:

   determine a wavelength shift of light (104) emitted by the light source (110) based on the second information; and
   compensate the first information based on the determined wavelength shift of the light (104) emitted by the light source (110).

5. The system (100) according to any one of claims 1-4, further comprising:

   an optical shortpass filter (214) arranged between the reference sample (202) and the spectrometer (120) such that the light (206) scattered by the reference sample (202) is received at the entrance slit (121) via the optical shortpass filter (214); and
   wherein the optical shortpass filter (214) is configured to transmit light having wavelengths within a third wavelength interval.

6. The system (100) according to claim 5, wherein the third wavelength interval comprises wavelengths shorter than a nominal wavelength of light (104) emitted by the light source (110), and wherein the optical shortpass filter (214) is configured to block a majority of wavelengths within the first wavelength interval.

7. The system (100) according to any one of claims 1-6, further comprising:

an optical fiber (118) configured to convey the light (206) scattered by the reference sample (202) to the entrance slit (121).

8. The system (100) according to claim 7, wherein the optical fiber (118) comprises the reference sample (202).

9. The system (100) according to claim 8, wherein the optical fiber (118) is a surface-enhanced Raman spectroscopy, SERS, fiber.

10. The system (100) according to any one of claims 1-9, further comprising:

an optical bandpass filter (112) arranged between the light source (110) and the dichroic mirror (113) such that the light source (110) illuminates the dichroic mirror (113) via the optical bandpass filter (112); and wherein the optical bandpass filter (112) is configured to transmit light having wavelengths within the first wavelength interval.

11. The system (100) according to any one of claims 1-10, further comprising:

an optical longpass filter (114) arranged between the dichroic mirror (113) and the spectrometer (120) such that the light (106) scattered by the sample (102) is received at the entrance slit (121) via the optical longpass filter (114); and wherein the optical longpass filter (114) is configured to transmit light having wavelengths within a fourth wavelength interval.

12. The system (100) according to claim 11, wherein the fourth wavelength interval comprises wavelengths longer than a nominal wavelength of light (104) emitted by the light source (110), and wherein the optical longpass filter (114) is configured to block a majority of wavelengths within the first wavelength interval.

13. The system (100) according to claim 1-12, further comprising:
a further dichroic mirror (117) arranged in between the dichroic mirror (113) and the spectrometer (120) such that the light (106) scattered by the sample (102) is transmitted through the further dichroic mirror (117) prior to being received at the entrance slit (121), and such that the light (206) scattered by the reference sample (202) is reflected by the further dichroic mirror (117) prior to being received at the entrance slit (121).

14. A method (50) for compensating a Raman spectrum of a sample by a Raman spectrum of a reference sample, the method comprising:

emitting (S500), from a light source (110), light (104) having wavelengths within a first wavelength interval;
reflecting (S502), using a dichroic mirror (113), a first portion (104a) of the emitted light to illuminate the sample (102);
transmitting (S504), through the dichroic mirror (113), a second portion (104b) of the emitted light to illuminate the reference sample (220);
transmitting (S506), through the dichroic mirror (113), light (106) scattered by the sample (102) to an entrance slit (121) of a spectrometer (120), wherein the light (106) scattered by the sample (102) has wavelengths within a second wavelength interval;
conveying (S508) light (206) scattered by the reference sample (202) to the entrance slit (121) of the spectrometer (120);
determining (S510), using the spectrometer (120), a signal comprising a first information pertaining to a Raman spectrum of the sample (102);
determining (S512), using the spectrometer (120), a second information pertaining to a Raman spectrum of the reference sample (202); and
compensating (S514) the first information based on the second information.

15. The method (50) according to claim 14, further comprising:

determining (S516) a wavelength shift of the light emitted by the light source (110) based on the second information; and
wherein the act of compensating (S514) the first information based on the second information comprises:
compensating (S518) the first information based on the determined wavelength shift of the emitted light.

*FIG. 1*

*FIG. 2*

**FIG. 3**

**FIG. 4**

50

| S500 |
| :---: |

↓

| S502 |
| :---: |

↓

| S504 |
| :---: |

↓

| S506 |
| :---: |

↓

| S508 |
| :---: |

| S510 |
| :---: |

↓

| S512 |
| :---: |

↓

| S516 |
| :---: |

↓

| S514 |
| :---: |
| S518 |

*FIG. 5*

Europäisches
Patentamt

European
Patent Office

Office européen
des brevets

# EUROPEAN SEARCH REPORT

**Application Number**

EP 21 21 7930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/072158 A1 (ILCHENKO OLEKSII [DK] ET AL) 11 March 2021 (2021-03-11) | 1-6, 10-12, 14,15 | INV. G01N21/65 G01N21/27 |
| Y | * paragraphs [0001], [0018], [0126] – [0130], [0186] – [0189], [0203], [0221] – [0224]; figures 1,2,5,7 * | 7-9 | |
| X | US 2013/162990 A1 (KOBAYASHI MINORU [JP] ET AL) 27 June 2013 (2013-06-27) | 1,3-6, 10-15 | |
| Y | * paragraph [0008]; figure 9 * | 7-9 | |
| Y | US 6 141 095 A (ALLEN FRITZ SCHREYER [US] ET AL) 31 October 2000 (2000-10-31) * column 9, line 3 – column 12, line 40; figure 1 * | 7 | |
| Y | GU CLAIRE ET AL: "Recent advance in fiber SERS sensors", ALGORITHMS AND TECHNOLOGIES FOR MULTISPECTRAL, HYPERSPECTRAL, AND ULTRASPECTRAL IMAGERY XIX – PROCEEDINGS OF SPIE, vol. 7056, 25 August 2008 (2008-08-25), page 70560H, XP055925534, US ISSN: 0277-786X, DOI: 10.1117/12.796874 ISBN: 978-1-5106-4548-6 * figures 1,2,5,7 * | 8,9 | TECHNICAL FIELDS SEARCHED (IPC) G01N |

The present search report has been drawn up for all claims

| Place of search | Date of completion of the search | Examiner |
|---|---|---|
| Munich | 30 May 2022 | Weinberger, Thorsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 7930

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2022

| Patent document cited in search report | | Publication date | Patent family member(s) | | Publication date |
|---|---|---|---|---|---|
| US 2021072158 | A1 | 11-03-2021 | EP<br>US<br>WO | 3743699 A1<br>2021072158 A1<br>2019145005 A1 | 02-12-2020<br>11-03-2021<br>01-08-2019 |
| US 2013162990 | A1 | 27-06-2013 | JP<br>JP<br>US<br>WO | 5092104 B2<br>2012047668 A<br>2013162990 A1<br>2012029286 A1 | 05-12-2012<br>08-03-2012<br>27-06-2013<br>08-03-2012 |
| US 6141095 | A | 31-10-2000 | NONE | | |

EPO FORM P0459

For more details about this annex : see Official Journal of the European Patent Office, No. 12/82